# EUROPÄISCHE PATENTSCHRIFT

(11) **EP 3 688 342 B1**
(45) Veröffentlichungstag und Bekanntmachung des Hinweises auf die Patenterteilung: **17.01.2024**
(21) Anmeldenummer: 18765395.1
(22) Anmeldetag: 29.08.2018
(51) Int. Cl.: F16H 57/04, F16H 61/00

(54) **ÖLVERTEILER**
OIL DISTRIBUTOR
DISTRIBUTEUR D'HUILE

(30) Priorität: 29.09.2017 DE 102017217377
(43) Veröffentlichungstag der Anmeldung: 05.08.2020
(73) Patentinhaber: ZF Friedrichshafen AG, 88046 Friedrichshafen (DE); ZF Wind Power Antwerpen NV, 3920 Lommel (BE)
(72) Erfinder: DE LAET, Wim, 2000 Antwerpen (BE); GEUDENS, Bart, 2470 Retie (BE); FRANCIS, Pieter-Jan, 3450 Geetbets (BE)
(74) Vertreter: ZF Friedrichshafen AG
(86) Internationale Anmeldenummer: PCT/EP2018/073204
(87) Internationale Veröffentlichungsnummer: WO 2019/063234

(56) Entgegenhaltungen:
- DE-A1-102009 030 751
- US-A- 4 126 058
- US-A1- 2006 049 084

## Beschreibung

Die Erfindung betrifft eine Anordnung nach dem Oberbegriff von Anspruch 1.

Zur Verzweigung einer Leitung zur Ölzufuhr in einem Getriebe sind aus dem Stand der Technik Lösungen mit Blenden bekannt. Eine ölzuführende Leitung verzweigt sich dabei in mehrere weiterführende Leitungen. In die weiterführenden Leitungen sind Blenden eingelassen, um eine definierte Verteilung des Öls zu erzielen.

Ölleitungen in einem Getriebegehäuse werden gewöhnlich durch Bohrungen eingebracht. Im Hinblick auf die Fertigungskosten sind Bohrungen mit gleichem Durchmesser anzustreben. Dies birgt aber die Gefahr, dass die Blenden falsch montiert werden. Darüber hinaus geht die Fertigung und Montage der Blenden mit erhöhten Kosten einher.

US 2006/049084 A1 offenbart ein Automatikgetriebe mit einem Hohlraum, in den drei Ölleitungen münden. Eine durch den Hohlraum verlaufende Platte weist Bohrungen auf, die mit den Mündungen zweier der Ölleitungen fluchten.

Ein weiteres Automatikgetriebe mit einem Hohlraum, in den mehrere Ölleitungen münden, und durch den eine Platte verläuft, lässt sich DE 10 2009 0030751 A1 entnehmen.

US 4 126 058 A zeigt eine Anordnung mit einer Verzweigung mehrere Fluidleitungen. Die Verzweigung wird durch eine Abdeckung gebildet, die auf eine Wandung aufgeschraubt ist.

Der Erfindung liegt die Aufgabe zugrunde, die den aus dem Stand der Technik bekannten Lösungen innewohnenden Nachteile zu eliminieren. Insbesondere soll das Fehlerrisiko bei der Montage von Ölleitungen gesenkt und die Kosten reduziert werden.

Diese Aufgabe wird gelöst durch eine Anordnung nach Anspruch 1. Bevorzugte Weiterbildungen sind in den Unteransprüchen enthalten.

Die Anordnung umfasst eine erste Ölleitung, eine zweite Ölleitung, eine dritte Ölleitung und einen Hohlraum. Unter einer Ölleitung ist eine Vorrichtung zum Leiten von Öl zu verstehen. Gewöhnlich ist eine Ölleitung als Rohr oder Bohrung ausgeführt. Ein Hohlraum bezeichnet ein von einer oder mehreren Wandungen umschlossenes Volumen.

Vorliegend münden die erste Ölleitung, die zweite Ölleitung und die dritte Ölleitung jeweils in den Hohlraum, d.h. die erste Ölleitung, die zweite Ölleitung und die dritte Ölleitung münden jeweils in den Hohlraum, d.h. weisen jeweils eine Mündung in den Hohlraum auf. Hierdurch sind sowohl die erste Ölleitung, die zweite Ölleitung als auch die dritte Ölleitung ölleitend mit dem Hohlraum verbunden.

Erfindungsgemäß ist eine Platte vorgesehen, die ein erstes Loch und ein zweites Loch aufweist. Das erste Loch und das zweite Loch sind durchgehend, d.h. erstrecken sich von einer Seite der Platte bis zur gegenüberliegenden Seite. Beide Seiten der Platte werden so durch das erste Loch und das zweite Loch jeweils ölleitend verbunden. Bei den Löchern handelt es sich etwa um Bohrungen.

Durch die Platte werden die Mündungen der zweiten Ölleitung und der dritten Ölleitung abgedeckt. Dies impliziert, dass sich die Platte in dem Hohlraum befindet.

Um die fluidleitende Verbindung zwischen der Mündung der zweiten Ölleitung und dem Hohlraum sowie zwischen der Mündung der dritten Ölleitung und dem Hohlraum zu erhalten, sind das erste Loch und das zweite Loch über den Mündungen angeordnet. Das erste Loch befindet sich über der Mündung der zweiten Ölleitung. Entsprechend befindet sich das zweite Loch über der Mündung der dritten Ölleitung. Das erste Loch verbindet somit die zweite Ölleitung und den Hohlraum ölleitend miteinander. Entsprechend verbindet das zweite Loch die dritte Ölleitung und den Hohlraum ölleitend miteinander.

Die Löcher übernehmen die Funktion der eingangs erwähnten Blenden. Durch die Verwendung einer einzelnen Platte anstelle mehrerer Blenden vereinfacht sich die Montage. Auch verringert sich das Risiko von Montagefehlern.

Bevorzugt ist die Anordnung mit einem Bauteil und einer Abdeckung weitergebildet. Das Bauteil weist eine Vertiefung auf. Es ist vorzugsweise einstückig ausgeführt. Ein Rand der Vertiefung verläuft bevorzugt in einer Ebene.

Der Abdeckung deckt die Vertiefung so ab, dass der oben beschriebene Hohlraum entsteht. Insbesondere deckt die Abdeckung die Vertiefung öldicht ab. Zwischen dem Rand der Vertiefung und der Abdeckung kann also kein Öl aus dem Hohlraum austreten.

Die zweite Ölleitung und die dritte Ölleitung münden in die Vertiefung. Die Mündungen der zweiten Ölleitung und der dritten Ölleitung befinden sich also in der Vertiefung, vorzugsweise am Boden der Vertiefung.

Die Vertiefung weist in einer bevorzugten Weiterbildung mindestens eine ebene Fläche auf. Bei der Fläche handelt es sich vorzugsweise um eine Grundfläche der Vertiefung, d.h. um eine Fläche, die den Boden der Vertiefung bildet. An ihren Rändern geht die Fläche in die Seitenflächen der Vertiefung über. Die Seitenflächen wiederum verbinden den Rand der Vertiefung mit der Grundfläche. Der Rand wird dabei durch Kanten der Seitenflächen gebildet.

Die zweite Ölleitung und die dritte Ölleitung münden weiterbildungsgemäß in die Fläche. Dies bedeutet, dass die Mündungen der Ölleitung in der Fläche liegen und jeweils von der Fläche umgeben sind. Weiterhin ist die Platte auf der Fläche fixiert. Dazu muss die Form der Platte der Form der Fläche entsprechen. Insbesondere wird eine ebene Platte bevorzugt.

In einer darüber hinaus bevorzugten Weiterbildung führt die erste Ölleitung durch die Abdeckung hindurch. Dies impliziert, dass die Abdeckung ein durchgehendes Loch aufweist, welches die erste Ölleitung und den Hohlraum ölleitend miteinander verbindet. Im Sinne obiger Beschreibung bildet das Loch einen Teil der ersten Ölleitung.

Um das Risiko von Montagefehlern weiter zu senken, sind die Platte und die Fläche in einer bevorzugten Weiterbildung deckungsgleich. Insbesondere kann die Platte eine Grundfläche, eine Deckfläche und mindestens eine Seitenfläche aufweisen, welche die Grundfläche und die Deckfläche miteinander verbindet. Die Grundfläche liegt weiterbildungsgemäß auf der Fläche der Vertiefung auf. Ihre Ränder und die Ränder der Fläche der Vertiefung verlaufen aneinander angrenzend. Insbesondere berührt jeder Rand in jedem Punkt jeweils einen Punkt des anderen Rands. Mündungen des ersten Lochs und des zweiten Lochs befinden sich jeweils in der Grundfläche und in der Deckfläche der Platte. Die Grundfläche und die Deckfläche sind bevorzugt kongruent. Das bedeutet, dass die beiden Flächen durch eine Kongruenzabbildung ineinander überführt werden können.

Weiterbildungsgemäß ist die Fläche der Vertiefung und damit auch die Platte bzw. deren Grundfläche nicht drehsymmetrisch. Auf diese Weise lässt sich sicherstellen, dass die Platte in genau einer Position auf der Fläche fixiert werden kann. Montagefehler sind dadurch unmöglich. Insbesondere die korrekte Anordnung des ersten Lochs und des zweiten Lochs auf der jeweiligen Mündung der zweiten Ölleitung und der dritten Ölleitung lässt sich so sicherstellen.

Bevorzugt ist die Anordnung darüber hinaus mit einem Ölkreislauf weitergebildet. Die erste Ölleitung, die zweite Ölleitung, die dritte Ölleitung und der Hohlraum sind derart in den Ölkreislauf eingebunden, dass Öl von der ersten Ölleitung in den Hohlraum eingeleitet wird. Da der Hohlraum über das erste Loch fluidleitend mit der zweiten Ölleitung und über das zweite Loch fluidleitend mit der dritten Ölleitung verbunden ist, gelangt das Öl infolgedessen aus dem Hohlraum in die zweite Ölleitung und die dritte Ölleitung. Somit wird das Öl durch die zweite Ölleitung und die dritte Ölleitung aus dem Hohlraum abgeleitet. Die Verteilung des Öls auf die zweite Ölleitung und die dritte Ölleitung erfolgt anteilig entsprechend der Größe des ersten Lochs und des zweiten Lochs.

Die Anordnung ist insbesondere zur Verwendung in einem Getriebe, etwa in einem Getriebe für eine Windkraftanlage, geeignet. Ein Gehäuse des Getriebes bildet dabei das oben beschriebene Bauteil. Dies impliziert, dass das Gehäuse eine Vertiefung aufweist, die von der Abdeckung abgedeckt wird. In das Gehäuse sind die zweite ÖIleitung und die dritte Ölleitung eingebracht, etwa in Gestalt von Bohrungen. Die erste Ölleitung ist dabei bevorzugt als Rohr ausgeführt und an die Abdeckung angeflanscht.

Bevorzugte Ausführungsbeispiele der Erfindung sind in den Figuren dargestellt. Übereinstimmende Bezugsziffern kennzeichnen dabei gleiche oder funktionsgleiche Merkmale. Im Einzelnen zeigt:
- Fig. 1: einen Querschnitt eines Ölverteilers; und
- Fig. 2: den Ölverteiler im geöffneten Zustand.

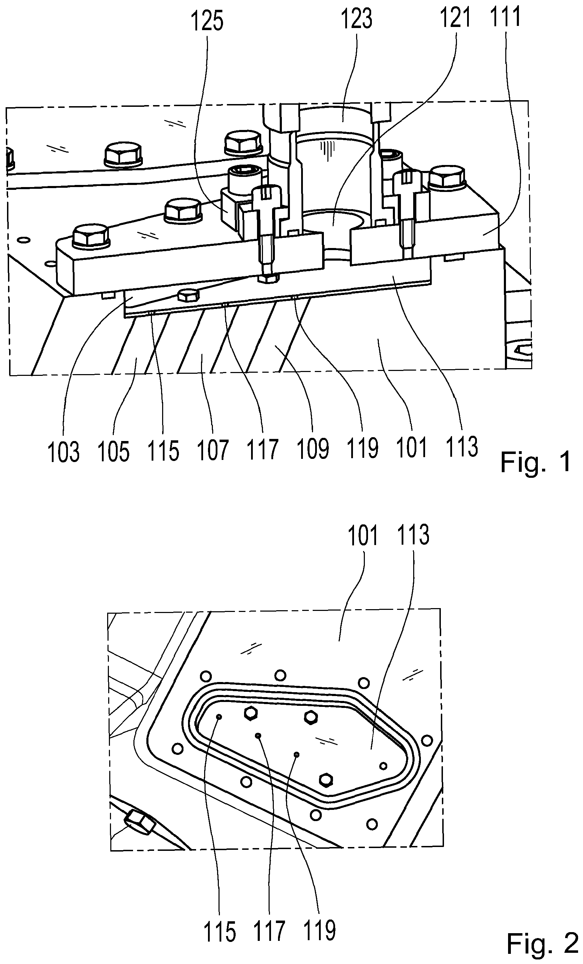

In Fig. 1 ist ein Getriebegehäuse 101 dargestellt, in dessen Wandung eine Vertiefung 103 eingebracht ist. Die Wandung des Getriebegehäuses 101 weist eine erste Bohrung 105, eine zweite Bohrung 107 und eine dritte Bohrung 109 auf, die jeweils in die Vertiefung 103 münden. Eine erste Platte 111 ist mit der Wandung des Getriebegehäuses 101 verschraubt und deckt die Vertiefung 103 ab. Somit bilden die erste Platte 111 und die Vertiefung 103 einen Hohlraum.

Innerhalb des von der Vertiefung 103 und der Platte 111 gebildeten Hohlraums ist eine zweite Platte 113 angeordnet. Diese ist am Boden der Vertiefung mit der Wandung des Getriebegehäuses 101 verschraubt und deckt die erste Bohrung 105, die zweite Bohrung 107 und die dritte Bohrung 109 ab. Die zweite Platte 113 weist ein erstes Loch 115, ein zweites Loch 117 und ein drittes Loch 119 auf. Die Löcher 115, 117, 119 sind jeweils durchgehend ausgeführt.

Das erste Loch 115 verbindet den Hohlraum und die erste Bohrung 105 fluidleitend miteinander; das zweite Loch 117 verbindet den Hohlraum und die zweite Bohrung 107 und das dritte Loch 119 den Hohlraum und die dritte Bohrung 109 fluidleitend miteinander.

Die erste Platte 111 weist ein viertes Loch 121 auf. Auch dieses ist durchgehend ausgeführt.

Um Öl in den Hohlraum einzuleiten, ist ein Rohr 123 vorgesehen. Das Rohr 123 ist so mit der ersten Platte 111 fixiert, dass eine Mündung des Rohrs 123 das vierte Loch 121 abdeckt. Mithin mündet das Rohr in das vierte Loch 121.

Ein Ring 125 fixiert das Rohr 123 formschlüssig. Der Ring 125 wiederum ist mit der ersten Platte 111 verschraubt. Um den Ring 125 besser montieren zu können, ist er zweistückig ausgeführt.

Fig. 2 zeigt das Getriebegehäuse 101 ohne die erste Platte 111 und das Rohr 123. Am Boden der Vertiefung 103 ist die zweiten Platte 113 sehen. Entlang eines Rands der Vertiefung 103 verläuft eine Nut, in die eine Dichtung eingebracht werden kann. Die Platte 113 wird von den Seitenflächen der Vertiefung 103 umrandet. Auf diese Weise ist die Position der zweiten Platte 113 innerhalb der Vertiefung 103 eindeutig festgelegt.

### Bezugszeichen

- 101: Getriebegehäuse
- 103: Vertiefung
- 105: erste Bohrung
- 107: zweite Bohrung
- 109: dritte Bohrung
- 111: erste Platte
- 113: zweite Platte
- 115: erstes Loch
- 117: zweites Loch
- 119: drittes Loch
- 121: viertes Loch
- 123: Rohr
- 125: Ring

## Patentansprüche

1. Anordnung mit einer ersten Ölleitung (121, 123), einer zweiten Ölleitung (105), einer dritten Ölleitung (107) und einem Hohlraum (103, 111); wobei
die erste Ölleitung (121, 123), die zweite Ölleitung (105) und die dritte Ölleitung (107) jeweils eine Mündung in den Hohlraum (103, 111) aufweisen; wobei
eine Platte (113) mit einem durchgehenden ersten Loch (115) und einem durchgehenden zweiten Loch (117); wobei
die Platte (113) so in dem Hohlraum (103, 111) angeordnet ist, dass die sie die Mündungen der zweiten Ölleitung (105) und der dritten Ölleitung (107) abdeckt; wobei das erste Loch (115) die zweite Ölleitung (105) und den Hohlraum (103) fluidleitend miteinander verbindet; und wobei
das zweite Loch (117) die dritte Ölleitung (107) und den Hohlraum (103, 111) fluidleitend miteinander verbindet; **gekennzeichnet durch**
ein Bauteil (101) und eine Abdeckung (111); wobei
das Bauteil (101) eine Vertiefung (103) aufweist; wobei
die Abdeckung (111) die Vertiefung (103) abdeckt; und wobei
die Mündungen der zweiten Ölleitung (105) und der dritten Ölleitung (107) in der Vertiefung (103) liegen.

2. Anordnung nach dem vorhergehenden Anspruch; **dadurch gekennzeichnet, dass**
die Vertiefung (103) mindestens eine ebene Fläche aufweist; wobei
die Mündungen der zweiten Ölleitung (105) und der dritten Ölleitung (107) in der Fläche liegen; und wobei
die Platte (113) auf der Fläche fixiert ist.

3. Anordnung nach einem der vorhergehenden zwei Ansprüche; **dadurch gekennzeichnet, dass**
die erste Ölleitung (121, 123) durch die Abdeckung (111) hindurchführt.

4. Anordnung nach einem der vorhergehenden zwei Ansprüche; **dadurch gekennzeichnet, dass**
die Platte (113) und die Fläche deckungsgleich sind; wobei
die Fläche nicht drehsymmetrisch ist.

5. Anordnung nach einem der vorhergehenden Ansprüche; **gekennzeichnet durch** einen Ölkreislauf; wobei
die erste Ölleitung (121, 123), die zweite Ölleitung (105), die dritte Ölleitung (107) und der Hohlraum (103, 111) derart in den Ölkreislauf eingebunden sind, dass Öl von durch die erste Ölleitung (121, 123) in den Hohlraum (103, 111) eingeleitet und durch die zweite Ölleitung (105) und die dritte Ölleitung (107) aus dem Hohlraum (103, 111) abgeleitet wird.

6. Getriebe mit einer Anordnung nach einem der Ansprüche 1 bis 5; **dadurch gekennzeichnet, dass**
ein Gehäuse (101) des Getriebes das Bauteil bildet.

## Claims

1. Assembly having a first oil line (121, 123), a second oil line (105), a third oil line (107), and a cavity (103, 111); wherein
the first oil line (121, 123), the second oil line (105), and the third oil line (107) each have an opening into the cavity (103, 111); wherein
a plate (113) with a continuous first bore (115) and a continuous second bore (117); wherein
the plate (113) is disposed in the cavity (103, 111) in such a way that said plate (113) covers the openings of the second oil line (105) and of the third oil line (107); wherein
the first bore (115) fluidically interconnects the second oil line (105) and the cavity (103); and wherein
the second bore (117) fluidically interconnects the third oil line (107) and the cavity (103, 111); **characterized by**
a component (101) and a cover (111); wherein
the component (101) has a depression (103); wherein the cover (111) covers the depression (103); and wherein
the openings of the second oil line (105) and of the third oil line (107) lie in the depression (103).

2. Assembly according to the preceding claim;
**characterized in that**
the depression (103) has at least one planar face; wherein
the openings of the second oil line (105) and of the third oil line (107) lie in the face; and wherein the plate (113) is fixed to the face.

3. Assembly according to one of the preceding two claims; **characterized in that**
the first oil line (121, 123) leads through the cover (111).

4. Assembly according to one of the preceding two claims; **characterized in that**
the plate (113) and the face are congruent; wherein the face is not rotationally symmetrical.

5. Assembly according to one of the preceding claims;
**characterized by** an oil circuit; wherein
the first oil line (121, 123), the second oil line (105), the third oil line (107), and the cavity (103, 111) are incorporated in the oil circuit in such a manner that oil is directed into the cavity (103, 111) via the first oil line (121, 123) and directed out of the cavity (103, 111) via the second oil line (105) and the third oil line (107).

6. Gearbox having an assembly according to one of Claims 1 to 5; **characterized in that** a housing (101) of the gearbox forms the component.

## Revendications

1. Agencement avec une première conduite d'huile (121, 123), une deuxième conduite d'huile (105), une troisième conduite d'huile (107) et une cavité (103, 111) ;
la première conduite d'huile (121, 123), la deuxième conduite d'huile (105) et la troisième conduite d'huile (107) présentant respectivement une embouchure dans la cavité (103, 111) ;
une plaque (113) avec un première trou traversant (115) et un deuxième trou traversant (117) ;
la plaque (113) étant agencée dans la cavité (103, 111) de manière à recouvrir les embouchures de la deuxième conduite d'huile (105) et de la troisième conduite d'huile (107) ;
le premier trou (115) reliant fluidiquement entre eux la deuxième conduite d'huile (105) et la cavité (103) ; et le deuxième trou (117) reliant fluidiquement entre eux la troisième conduite d'huile (107) et la cavité (103, 111) ; **caractérisé par**
un composant (101) et un couvercle (111) ;
le composant (101) présentant un creux (103) ;
le couvercle (111) recouvrant le creux (103) ; et
les embouchures de la deuxième conduite d'huile (105) et de la troisième conduite d'huile (107) étant situés dans le creux (103).

2. Agencement selon la revendication précédente ; **caractérisé en ce que** le creux (103) présente au moins une surface plane ;
les embouchures de la deuxième conduite d'huile (105) et de la troisième conduite d'huile (107) étant situées dans la surface ; et
la plaque (113) étant fixée sur la surface.

3. Agencement selon l'une quelconque des deux revendications précédentes ; **caractérisé en ce que** la première conduite d'huile (121, 123) passe à travers le couvercle (111).

4. Agencement selon l'une quelconque des deux revendications précédentes ; **caractérisé en ce que** la plaque (113) et la surface sont en coïncidence ;
la surface n'étant pas symétrique en rotation.

5. Agencement selon l'une quelconque des revendications précédentes ; **caractérisé par** un circuit d'huile ;
la première conduite d'huile (121, 123), la deuxième conduite d'huile (105), la troisième conduite d'huile (107) et la cavité (103, 111) étant intégrées dans le circuit d'huile de telle sorte que l'huile est introduite dans la cavité (103, 111) par la première conduite d'huile (121, 123) et est évacuée de la cavité (103, 111) par la deuxième conduite d'huile (105) et la troisième conduite d'huile (107).

6. Transmission avec un agencement selon l'une quelconque des revendications 1 à 5 ; **caractérisée en ce qu'**un carter (101) de la transmission forme le composant.
